# EUROPÄISCHE PATENTSCHRIFT

(11) **EP 3 683 639 B1**
(45) Veröffentlichungstag und Bekanntmachung des Hinweises auf die Patenterteilung: **06.09.2023**
(21) Anmeldenummer: 19217446.4
(22) Anmeldetag: 18.12.2019
(51) Int. Cl.: G05B 19/418

(54) **MESSSYSTEM UND VERFAHREN ZUM BETREIBEN EINES MESSSYSTEMS**
MEASURING SYSTEM AND METHOD FOR OPERATING SAME
SYSTÈME DE MESURE ET PROCÉDÉ DE FONCTIONNEMENT D'UN SYSTÈME DE MESURE

(30) Priorität: 17.01.2019 DE 102019101117
(43) Veröffentlichungstag der Anmeldung: 22.07.2020
(73) Patentinhaber: Turck Holding GmbH, 58553 Halver (DE)
(72) Erfinder: Steiner, René, 58119 Hagen (DE); Schmermund, Christoph, 45144 Essen (DE); Strunkmann, Peter, 32760 Detmold (DE)
(74) Vertreter: DTS Patent- und Rechtsanwälte Schnekenbühl und Partner mbB

(56) Entgegenhaltungen:
- EP-A1- 1 450 137
- WO-A1-2009/030531
- DE-A1- 4 424 773

## Beschreibung

Die vorliegende Erfindung betrifft ein Messsystem und ein Verfahren zum Betreiben eines Messsystems. Insbesondere liegt die Erfindung auf dem Gebiet der Messsysteme für die industrielle Automatisierungstechnik.

Im Stand der Technik sind Messsysteme bekannt, die eine Vielzahl von Messselementen aufweisen. Um die einzelnen Messelemente anzusteuern ist typischerweise ein Auswertemodul erforderlich, welches Befehle an die Messelemente sendet und Messdaten empfängt, die von den Messelementen an das Auswertemodul gesendet werden. Beispielsweise kann es sich bei den Messelementen um RFID Schreib-Lese-Köpfe handeln, mit welchen Informationen aus RFID Tags ausgelesen oder hineingeschrieben werden können. So können beispielsweise an Produktionslinien RFID Schreib-Lese-Köpfe angebracht werden, um damit Werkstücke und/oder andere Objekte auf bzw. in der Produktionslinie mittels eines RFID Tags zu identifizieren und/oder andere Informationen daraus auszulesen.

Beispielsweise stellt das RFID-System BL IDENT des Herstellers HANS TURCK GmbH & Co. KG ein Messsystem dar, welches über mehrere als RFID Schreib-Lese-Köpfe ausgebildete Messelemente verfügt, die mittels eines Auswertemoduls angesteuert werden. Dabei wird jedes Messelement über einen separaten Kanal mit dem Auswertemodul verbunden, über welchen das Auswertemodul dem Messelement Befehle bereitstellen kann und das Messelement an das Auswertemodul Messdaten senden kann. Auch können Verteilermodule verwendet werden, mittels welchen sich mehrere Schreib-Lese-Köpfe bzw. Messelemente, beispielsweise bis zu 32, pro Kanal bzw. an einem Auswertemodul angeschlossen werden können. Jedoch kann pro Kanal stets nur ein Messelement aktiv sein, während die anderen Messelemente inaktiv sein müssen.

Gemäß einem weiteren im Stand der Technik bekannten Messsystem von dem Hersteller BALLUFF mit der Technik BALLUFF EASY LOOP können unter der Verwendung von Expandermodulen bis zu 32 Schreib-Lese-Köpfe an einem Auswertemodul verwendet werden. Zur Übermittlung der Daten von den Messelementen an das Auswertemodul ist es erforderlich, dass die Messelemente aus Einzeltelegrammen eine Datenkette bilden. Dabei werden die Informationen von einem Messelement an das nächste Messelement im Kanal gesendet. Ein Messelement empfängt dazu die aus den Einzeltelegrammen gebildete Datenkette vom vorherigen Messelement, fügt sein eigenes Einzeltelegramm an und sendet die auf diese Weise erweiterte Datenkette weiter an das nächste Messelement, bis schließlich das letzte Messelement im Ring bzw. im Kanal die vollständige Datenkette an das Auswertemodul sendet. Mit anderen Worten erfordert diese Technologie stets das Senden der Messdaten aller Messelemente in einer vollständigen Datenkette. Das gezielte, separate Senden der Informationen von einem Messelement an das Auswertemodul ist somit nicht möglich.

Stand der Technik zum Gegenstand der Erfindung ist beispielsweise zu finden in EP 1 450 137 A1 und DE 44 24 773 A1.

Es ist die Aufgabe der vorliegenden Erfindung, ein Messsystem und ein Verfahren zum Betreiben eines Messsystems bereitzustellen, welches eine größere Flexibilität zum Betreiben der Messelemente bietet und ein effizienteres Bereitstellen der Messdaten ermöglicht.

Diese Aufgabe wird erfindungsgemäß gelöst durch Verfahren und Messsysteme mit den Merkmalen der jeweiligen unabhängigen Ansprüche. Vorteilhafte Ausgestaltungen sind in den Unteransprüchen angegeben.

In einem ersten Aspekt betrifft die Erfindung ein Verfahren zum Betreiben eines Messsystems mit einem Auswertemodul und mehreren Messelementen, wobei das Auswertemodul und die Messelemente über eine Kommunikationsleitung verbunden sind. Das Verfahren weist ein Ermitteln von Messdaten mittels der mehreren Messelemente auf, wobei zumindest zwei der Messelemente zumindest teilweise zeitgleich die Messdaten ermitteln. Ferner weist das Verfahren ein Zwischenspeichern der ermittelten Messdaten in dem jeweiligen Messelement auf, sowie ein Auslesen der in den Messelementen zwischengespeicherten Messdaten über die Kommunikationsleitung mittels des Auswertemoduls.

Hierbei erfolgt das Zwischenspeichern der ermittelten Messdaten in einem Pufferspeicher des jeweiligen Messelements. Beispielsweise können die Messelemente dazu mit einem Speichermodul ausgestattet sein, wie etwa einem Flash-Speicher und/oder einem RAM-Speicher.

In einem weiteren Aspekt betrifft die Erfindung ein Messsystem mit eine Auswertemodul, mehreren Messelemente und einer Kommunikationsleitung, welche das Auswertemodul und die mehreren Messelemente verbindet. Die Messelemente sind dabei jeweils dazu eingerichtet, Messdaten zu ermitteln, wobei das Ermitteln der Messdaten durch die mehreren Messelemente zumindest teilweise zeitgleich erfolgt und wobei die Messelemente dazu eingerichtet sind, die ermittelten Messdaten in dem jeweiligen Messelement zwischen zu speichern. Das Zwischenspeichern der ermittelten Messdaten erfolgt in einem Pufferspeicher des jeweiligen Messelements. Das Auswertemodul ist dazu eingerichtet, die in den Messelementen zwischengespeicherten Messdaten über die Kommunikationsleitung auszulesen.

Das Auslesen der zwischengespeicherten Messdaten umfasst ein Fragmentieren der Messdaten in Fragmente und ein sukzessives Auslesen der Fragmente. Dies bietet den Vorteil, dass Messdaten auch dann zuverlässig ausgelesen werden können, wenn deren Größe bzw. Datenmenge zu groß ist, um diese als Ganzes über die Kommunikationsleitung zu übertragen. Beispielsweise kann ein BUS-System verwendet werden, dessen maximale Größe der übertragbaren Datenpakete kleiner ist, als die Datenmenge der Messdaten. Durch ein Fragmentieren der Messdaten in Fragmente mit einer Größe bzw. Datenmenge, die kleiner oder gleich der maximal übertragbaren Datenpakete ist, können die Messdaten dennoch zuverlässig ausgelesen werden.

In einem weiteren Aspekt betrifft die Erfindung ein Computerprogrammprodukt, das ein nicht-flüchtiges, computerlesbares Speichermedium umfasst, auf dem ein ausführbarer Programmcode gespeichert ist, der konfiguriert ist, um ein Messsystem dazu zu veranlassen, ein erfindungsgemäßes Verfahren durchzuführen.

Ein Auswertemodul kann dabei insbesondere als eine Steuereinheit ausgebildet sein und/oder eine Recheneinheit aufweisen. Das Auswertemodul ist vorzugsweise dazu eingerichtet, Befehle, wie etwa Steuerbefehle, an die Messelemente zu senden und vorzugsweise Daten von den Messelementen auszulesen bzw. zu empfangen. Insbesondere können das Auswertemodul und/oder das Messsystem dazu eingerichtet sein, gleichartige Befehle und/oder denselben Befehl an alle damit verbundenen Messelemente zeitgleich zu versenden. Beispielsweise können das Auswertemodul und/oder das Messsystem dazu eingereicht sein, einen Befehl derart zu versenden, dass alle Messelemente diesen einen Befehl empfangen. Dass die Messelemente den Befehl zeitgleich bzw. gleichzeitig empfangen bedeutet, dass der Befehl zeitgleich an alle Messelemente gesendet wird. Der exakte Zeitpunkt des Empfangs durch die einzelnen Messelemente kann aufgrund von technischen Gegebenheiten voneinander abweichen, wie etwa aufgrund von einer endlich schnellen Übertragungsgeschwindigkeit und unterschiedlichen Übertragungsdauern zu den verschiedenen Messelementen. Dennoch ist dies als gleichzeitig im Sinne dieser Erfindung anzusehen.

Die Messelemente weisen vorzugsweise Sensoren und/oder Antennen auf und sind vorzugsweise dazu eingerichtet, Messdaten zu ermitteln. Beispielsweise können die Messelemente dazu eingerichtet sein, Umgebungsparameter zu ermitteln, wie beispielsweise eine Temperatur, eine Luftfeuchtigkeit, ein elektrisches Feld, ein Magnetfeld, einen mechanischen Kontakt, eine Kraft, elektromagnetische Wellen, optische Strahlung, infrarote Strahlung, ultraviolette Strahlung, Röntgenstrahlung, radioaktive Strahlung und/oder Kombinationen davon. Vorzugsweise können die Messelement einen RFID Schreib-Lese-Kopf aufweisen oder als solche ausgebildet sein und insbesondere dazu ausgelegt sein, einen in einem Schreib-Lesebereich des RFID Schreib-Lese-Kopfes befindlichen RFID Tag auszulesen und/oder Daten auf diesen zu schreiben. Die Messelemente können dabei alle gleichartig oder verschiedenartig ausgebildet sein. Beispielsweise können gleichartige Messelemente verwendet werden, um parallelisiert, beispielsweise auf mehreren parallelen Fertigungslinien, selbige Handlungen bzw. Operationen durchzuführen. Alternativ können vorzugsweise verschiedenartige Messelemente in einem Messsystem kombiniert werden, um etwa verschiedenartige Messdaten zu ermitteln.

Eine Kommunikationsleitung ist vorzugsweise ein Netzwerk oder ein Teil davon und ermöglicht den insbesondere elektronischen Austausch von Informationen zwischen dem Auswertemodul und den Messelementen und vorzugsweise, aber nicht zwingend, zwischen den Messelementen untereinander. Die Kommunikationsleitung kann kabelgebunden und/oder drahtlos ausgebildet sein. Die Kommunikationsleitung kann vorzugsweise dazu eingerichtet sein, die Messelemente mit dem Auswertemodul seriell oder parallel zu verbinden. Insbesondere kann die Kommunikationsleitung als ein Bus-System ausgebildet sein und/oder ein Bus-System umfassen oder als Teil eines Bus-Systems ausgebildet sein. Beispielsweise kann die Kommunikationsleitung als ein HF Bus-System eingerichtet sein oder ein solches umfassen. Beispielsweise können die Kommunikationsleitung und/oder das Messsystem gemäß dem Standard RS-485 oder RS-232 ausgebildet sein.

Dass das Ermitteln von Messdaten "zumindest teilweise zeitgleich" erfolgt, bedeutet dabei, dass das Ermitteln von Messdaten durch zumindest zwei Messelemente mit einem zeitlichen Überlapp erfolgt. Mit anderen Worten erfolgt das Ermitteln von Messdaten nicht ausschließlich seriell, d.h. zeitlich nacheinander, sondern zumindest teilweise parallel, sodass zumindest zu manchen Zeitpunkten mindestens zwei der mehreren Messelemente aktiv sind. Das Ermitteln der Messdaten durch die mehreren Messelemente muss dabei nicht zwingend vollständig synchron erfolgen, wenngleich dies gemäß einer bevorzugten Ausführungsform der Fall ist. Vorzugsweise erfolgt das Ermitteln von Messdaten durch alle Messelemente zumindest teilweise gleichzeitig. Vorzugsweise werden die Messelemente parallel betrieben werden, d.h. dass diese die gleichen Befehle und/oder Tätigkeiten zeitgleich ausführen.

Das Zwischenspeichern der ermittelten Messdaten bedeutet dabei, dass diese zunächst im jeweiligen Messelement vorübergehend abgespeichert werden, anstatt umgehend an das Auswertemodul übertragen zu werden. Mit anderen Worten werden die ermittelten Messdaten zunächst im Messelement abgelegt und vorgehalten, sodass diese sodann vom Auswertemodul abgeholt bzw. ausgelesen werden können bzw. nach Aufforderung durch das Auswertemodul an das Auswertemodul gesendet werden.

Dass die zwischengespeicherten Messdaten mittels des Auswertemoduls ausgelesen werden, bedeutet dabei, dass das Auswertemodul aktiv wird, um die zwischengespeicherten Messdaten aus den Messelementen zu extrahieren. Vorzugsweise nehmen die Messelemente beim Auslesen lediglich eine passive Rolle ein. Vorzugsweise erfolgt das Auslesen der Messdaten mittels des Auswertemoduls auf Initiative des Auswertemoduls. Alternativ senden die Messelemente die zwischengespeicherten Messdaten an das Auswertemodul, nachdem sie vom Auswertemodul durch einen entsprechenden Befehl dazu veranlasst wurden. Ein eigenständiges Senden der Messdaten durch die Messelemente ohne vorherige Aufforderung durch das Auswertemodul findet hingegen nicht statt.

Die Erfindung bietet den Vorteil, dass die mehreren Messelemente parallel und zumindest teilweise zeitgleich betrieben werden können und dennoch die Messdaten auf geordnete Weise bereitgestellt werden können. Dadurch, dass das Auslesen der zwischengespeicherten Messdaten mittels des Auswertemoduls erfolgt, ist es nicht erforderlich, dass die einzelnen Messelemente auf eigene Initiative die Messdaten über die Kommunikationsleitung an das Auswertemodul übermitteln und/oder in die Kommunikationsleitung einspeisen, wodurch ein Datenverlust oder ein Verlust der Zuordenbarkeit der übertragenen Messdaten vermieden werden kann.

Auch bietet die Erfindung den Vorteil, dass die Messdaten der einzelnen Messelemente gezielt ausgelesen werden können, ohne dazu die Messdaten aller Messelemente auslesen zu müssen. Auf diese Weise kann ein gezieltes und/oder schnelleres Auslesen der Messdaten einzelner Messelemente erfolgen. Mit anderen Worten erfolgt vorzugsweise eine Übermittlung von Informationen von den Messelementen zum Auswertemodul nur dann, wenn relevante Daten, insbesondere Messdaten, vorliegen. Dies kann insbesondere dann der Fall sein, wenn Messdaten ermittelt und zwischengespeichert wurden, insbesondere wenn beispielsweise ein Datenträger bzw. RFID-Chip von einem Messelement ausgelesen wurde. Sofern keine relevanten Daten, insbesondere keine Messdaten, in einem Messelement vorliegen, d.h. zwischengespeichert wurden, erfolgt vorzugsweise keine Übermittlung von Informationen von den Messelementen über die Kommunikationsleitung zum Auswertemodul. Eine Notwendigkeit, die Messdaten aller Messelemente mittels einer Datenkette auszulesen besteht daher nicht.

Ferner bietet die Erfindung den Vorteil, dass eine zuverlässige Zuordenbarkeit der ausgelesenen Messdaten zu den jeweiligen Messelementen ermöglicht wird, da das Auswertemodul die einzelnen Messelemente gezielt adressieren und auslesen kann, ohne dass für den Ausleseprozess weitere Messelemente adressiert werden müssen. Vorzugsweise erfolgt das Auslesen der in den Messelementen zwischengespeicherten Messdaten sequentiell. Vorzugsweise werden die Messdaten aus den einzelnen Messelementen zeitlich nacheinander ausgelesen.

Außerdem bietet die Erfindung den Vorteil, dass ein paralleles Ermitteln von Messdaten durch die mehreren Messelemente erzielt werden kann, da jedes Messelement Messdaten ermitteln kann, ohne die Kommunikationsleitung und/oder die anderen Messelemente dadurch zu beeinträchtigen. Dadurch, dass die Messelemente die ermittelten Messdaten zunächst zwischenspeichern und das Auslesen mittels des Auswertemoduls geordnet erfolgen kann, kann ein paralleles Betreiben der Messelemente ohne Beeinträchtigung der Kommunikation und/oder der Kommunikationsleitung erfolgen.

Vorzugsweise ermittelt zumindest eines der Messelemente nach erfolgtem Zwischenspeichern erneut Messdaten. Mit anderen Worten erfolgt das Ermitteln und Zwischenspeichern der Messdaten vorzugsweise mehrmals hintereinander und/oder kontinuierlich. Besonders bevorzugt erfolgen die Schritte des Ermittelns der Messdaten und des Zwischenspeicherns durch zumindest eines der Messelemente kontinuierlich in abwechselnder Reihenfolge. Dies kann beispielsweise so lange ausgeführt werden, bis eine Abbruchbedingung erfüllt ist. Beispielsweise kann ein Befehl zur Beendigung des Ermittelns von Messdaten und/oder ein Reset-Befehl und/oder ein Zeitablauf einer vorbestimmten Zeitspanne eine solche Abbruchbedingung darstellen. Dies ermöglicht das Ermitteln und Zwischenspeichern in einem kontinuierlichen Dauermodus auszuführen, bis das Einstellen des Ermittelns mittels eines weiteren Befehls instruiert wird oder bis eine bestimmte Zeitdauer abgelaufen ist. Mit anderen Worten ist zumindest einer der Befehle ein als Dauermodusbefehl ausgebildet und veranlasst die Messelemente dazu, kontinuierlich alternierend Messdaten zu ermitteln und zwischen zu speichern. Dadurch lässt sich die erforderliche Kommunikation zur Bereitstellung der Befehle entsprechend reduzieren.

Vorzugsweise umfasst das Verfahren ferner ein Bereitstellen zumindest eines Befehls an die mehreren Messelemente mittels des Auswertemoduls, wobei die Bereitstellung des zumindest einen Befehls an die Messelemente über die Kommunikationsleitung erfolgt. Mit anderen Worten sendet das Auswertemodul vorzugsweise auch einen oder mehrere Befehle über die Kommunikationsleitung an die mehreren Messelemente. Beispielsweise kann die Bereitstellung eines Befehls dem Ermitteln und Zwischenspeichern von Messdaten durch die Messelemente vorausgehen und die Messelemente bei Ausführung des Befehls zum Ermitteln und Zwischenspeichern der Messdaten veranlassen. Alternativ oder zusätzlich kann ein Befehl bei dessen Ausführung die Messelemente dazu veranlassen, das Ermitteln und/oder Zwischenspeichern der Messdaten einzustellen. Dies bietet den Vorteil, dass die Kommunikationsleitung auch zur Bereitstellung der Befehle genutzt werden kann.

Vorzugsweise weisen die Messelemente jeweils einen Pufferspeicher auf und sind dazu eingerichtet, die ermittelten Messdaten in dem jeweiligen Pufferspeicher zwischen zu speichern. Dies bietet die Möglichkeit auf, die ermittelten Messdaten vorzuhalten, bis diese von dem Auswertemodul ausgelesen werden. Gemäß einer bevorzugten Ausführungsform kann der Pufferspeicher derart begrenzt sein, dass nur Messdaten von einem oder mehreren Ermittlungsvorgängen im Pufferspeicher zwischengespeichert werden können. Dies bietet die Möglichkeit, die Hardware Anforderungen an den Pufferspeicher, wie etwa dessen Speicherkapazität, zu begrenzen und dadurch beispielsweise die Herstellungskosten zu reduzieren. Bevorzugt werden die ältesten zwischengespeicherten Messdaten, die sich im Pufferspeicher befinden, durch neue ermittelte Messdaten überschrieben, wenn das Zwischenspeichern der neuen ermittelten Messdaten die Speicherkapazität übersteigen würde. Dies ermöglicht eine effiziente Nutzung des Pufferspeichers und maximiert die Vorhaltedauer der zwischengespeicherten Messdaten, um diese auch bei einem zeitlich verzögerten Auslesevorgang noch durch das Auswertemodul auslesen zu können.

Bevorzugt weist das Auswertemodul eine Speichereinheit auf und ist dazu eingerichtet, die aus den Messelementen ausgelesenen Messdaten in der Speichereinheit zu speichern. Besonders bevorzugt weist die Speichereinheit einen FIFO-Speicher auf. Ein FIFO-Speicher ist dabei ein "First-In-First-Out Speicher", bei welchem die Reihenfolge des Auslesens der Daten aus dem Speicher der Reihenfolge des Dateneingangs entspricht.

Vorzugsweise weisen zumindest manche der Messelemente jeweils einen Schreib-Lese-Kopf auf oder sind als solcher ausgebildet. Besonders bevorzugt sind die Schreib-Lese-Köpfe dazu eingerichtet, ein RFID-Element, wie etwa einen RFID-Tag und/oder einen RFID-Chip auszulesen.

Die zuvor und im Folgenden erläuterten Ausführungsformen, Beispiele und Merkmale sind nicht nur als in den jeweils genannten Kombinationen offenbart zu verstehen, sondern auch in separat voneinander und in anderen technisch umsetzbaren Kombinationen. Weitere Einzelheiten und Vorteile der Erfindung sollen nun anhand von in den Zeichnungen dargestellten bevorzugten Ausführungsformen näher erläutert werden.

Es zeigen:
- Fig. 1A und 1B: ein Messsystem gemäß einer bevorzugten Ausführungsform in einer schematischen und einer perspektivischen Darstellung;
- Fig. 2A und 2B: eine schematische Erläuterung eines Verfahrens gemäß einer bevorzugten Ausführungsform.

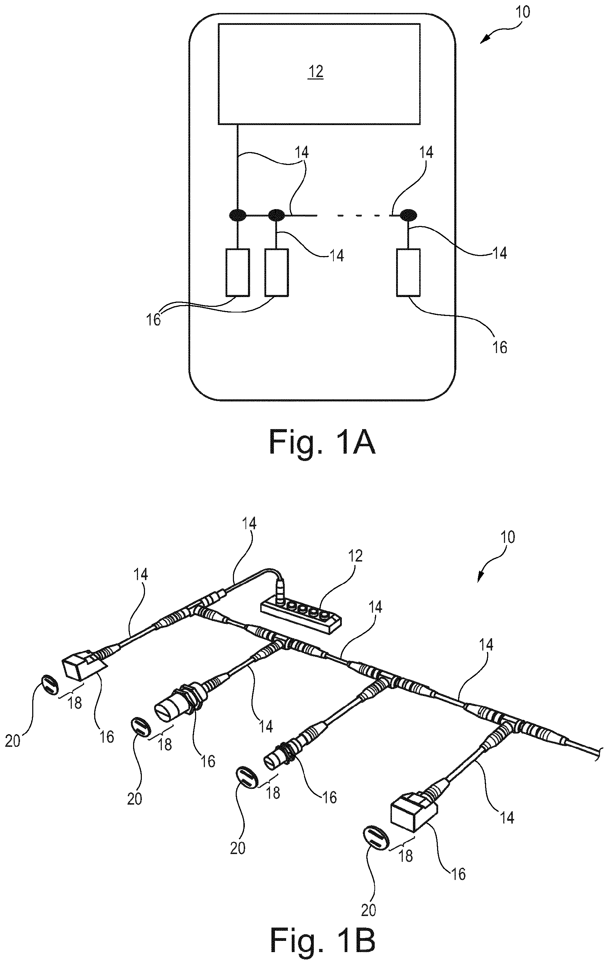

Fig. 1A zeigt in einer schematischen Darstellung ein Messsystem 10 gemäß einer bevorzugten Ausführungsform. Das Messsystem 10 weist ein Auswertemodul 12 auf, welches über eine Kommunikationsleitung 14 mit mehreren Messelementen 16 verbunden ist. Wenngleich in der gezeigten Darstellung drei Messelemente 16 gezeigt sind, können in anderen Ausführungsformen nur zwei Messelemente 16 oder mehr als drei Messelemente 16 über die Kommunikationsleitung 14 mit dem Auswertemodul 12 verbunden sein. Die Kommunikationsleitung 14 ermöglicht dabei eine Kommunikation und einen Datenaustausch zwischen den Messelementen 16 und dem Auswertemodul 12, sodass das Auswertemodul 12 Befehle an einzelne oder an alle Messelemente 16 senden kann und in den Messelementen 16 zwischengespeicherte Messdaten auslesen kann.

Die Messelemente 16 sind dabei gleichartig oder verschiedenartig ausgebildet, d.h. dass das Messsystem 10 entweder nur gleichartige Messelemente 16 aufweist, oder verschiedenartige Messelemente 16 umfasst.

Die Messelemente 16 weisen jeweils zumindest ein Speicherelement auf (nicht gezeigt), welches als Pufferspeicher dienen kann, um etwa empfangene Befehle und/oder ermittelte Messdaten im Messelement 16 zwischen zu speichern. Die von dem Messelement ermittelten Messdaten werden dabei insbesondere zwischengespeichert, bis diese von dem Auswertemodul 12 ausgelesen werden.

Figur 1B zeigt ein Messsystem 10 gemäß einer bevorzugten Ausführungsform in einer perspektivischen Darstellung. Gemäß dieser bevorzugten Ausführungsform sind die Messelemente 16 als Schreib-Lese-Köpfe ausgebildet, um RFID-Chips auslesen zu können, wenn sich diese in einem Schreib-Lese-Bereich nahe dem jeweiligen Messelement 16 befinden. Gemäß der gezeigten Ausführungsform sind die Messelemente 16 als zumindest teilweise verschiedenartige Schreib-Lese-Köpfe ausgebildet. Die Messelemente 16 können dabei sowohl in Ihrer Form voneinander abweichen, als auch in Ihrer Funktionalität. Beispielsweise können die Messelemente als verschiedenartige Schreib-Lese-Köpfe ausgebildet sein, um verschiedenartige RFID-Chips auslesen zu können und/oder um unterschiedlich ausgebildete Schreib-Lese-Bereiche bereitzustellen. Letzteres kann beispielsweise dadurch erreicht werden, dass die Schreib-Lese-Köpfe eine Funkverbindung mit RFID-Chips mit unterschiedlich großer Reichweite aufbauen können.

Das Auswertemodul ist vorzugsweise mit einer Speichereinheit ausgestattet, zumindest um die aus den Messelementen ausgelesenen Messdaten zu speichern und/oder zwischen zu speichern. Die Speichereinheit des Auswertemoduls 14 ist vorzugsweise als ein FIFO-Speicher bzw. Ringspeicher eingerichtet, in welchem die gespeicherten Daten in gleicher Reihenfolge entnommen bzw. gelöscht bzw. überschrieben werden, in welcher diese im Speicher eingegangen sind. Das Auswertemodul ist vorzugsweise ferner dazu eingerichtet, Befehle an die Messelemente 16 zu senden und auf diese Weise die Messelemente 16 anzusteuern.

Die Kommunikationsleitung ist gemäß der gezeigten Ausführungsform als eine Kabelverbindung ausgebildet. Die Kabelverbindung kann dabei mehrere Segmente umfassen, welche zu der Kommunikationsleitung bzw. Kabelverbindung zusammengefügt sind. Dies bietet den Vorteil, dass sich die Kabelverbindung mittels einzelner Segmente nach Bedarf verlängern bzw. anpassen lässt. Beispielsweise kann die Kommunikationsleitung 14 die Messelemente 16 mit dem Auswertemodul derart verbinden, dass die Messelemente 16 in Reihe bzw. seriell geschaltet sind. Vorzugsweise können in einem Messsystem 10 bis zu 32 Messelemente 16, insbesondere Schreib-Lese-Köpfe, mittels einer Kommunikationsleitung bzw. in einem Bus mit einem Auswertemodul 12 verbunden werden. Gemäß manchen bevorzugten Ausführungsformen kann die Verwendung von T-Stücken und/oder eines Abschlusswiderstands vorteilhaft und/oder erforderlich sein. Das Messsystem 10 kann vorzugsweise gemäß dem Standard RS-485 ausgebildet sein.

Vorzugsweise unterstützt das Messsystem 10 das Auslesen und/oder Schreiben einer UID, d.h. einer im Datenträger bzw. RFID-Chip hinterlegten Information zur Identifikation des Datenträgers bzw. RFID-Chips, und/oder von Nutzdaten auf dem Datenträger bzw. RFID-Chip mittels der Messelemente 16. Besonders bevorzugt wird das Lesen und/oder Schreiben von zumindest 64 Byte an Daten pro Vorgang unterstützt. Sofern die zu lesenden und/oder zu schreibenden Daten größer als eine maximal pro Vorgang lesbare und/oder schreibbare Datenmenge sind, kann das Messsystem 10 vorzugsweise die zu lesenden und/oder zu schreibenden Daten fragmentieren, um die Daten in lesbare und/oder schreibbare Datenpakete zu teilen. Die Fragmentierung erfolgt besonders bevorzugt im Messelement, in welchem bevorzugt die zwischengespeicherten Messdaten bei Bedarf fragmentiert werden können. Auch die zwischengespeicherten Messdaten können vorzugsweise im Messelement fragmentiert werden, um das Auslesen mittels des Auswertemoduls zu erleichtern und/oder zu ermöglichen. Dies kann insbesondere dann vorteilhaft sein, wenn eine maximale Datenmenge für das Auslesen der zwischengespeicherten Messdaten kleiner als die Datenmenge der zwischengespeicherten Messdaten ist.

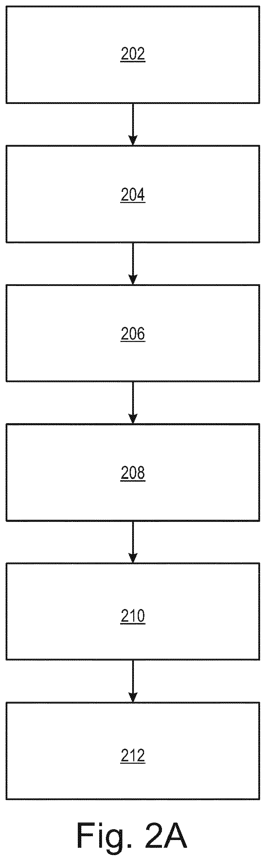

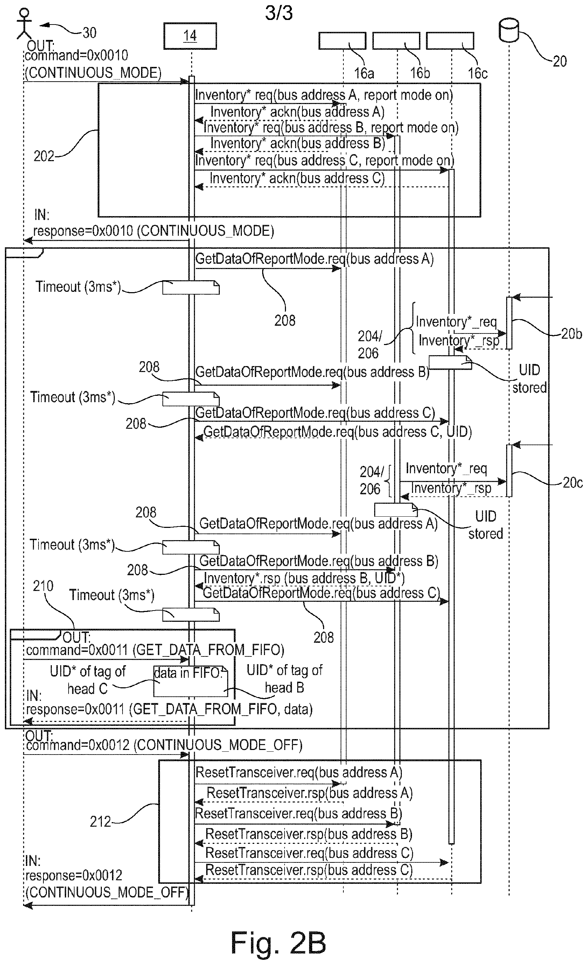

Anhand der Figuren 2A und 2B wird im Folgenden ein bevorzugtes Verfahren zum Betreiben eines Messsystems geschildert. Figur 2A zeigt in einem schematischen Diagramm den Ablauf der einzelnen Verfahrensschritte 202 bis 212. Figur 2B zeigt in einem mit beispielhaftem Programmtext versehenen Blockdiagramm den Verfahrensablauf anhand von Befehlen und Mitteilungen, die zumindest teilweise über die Kommunikationsleitung 14 übertragen werden.

Das Messsystem 10, welches mit dem bevorzugten Verfahren betrieben werden kann, weist ein Auswertemodul 12 und mehrere Messelemente 16 auf, wobei die Messelemente 16 über eine Kommunikationsleitung 14 mit dem Auswertemodul 12 verbunden sind. Besonders bevorzugt ist das Messsystem 10 gemäß der in Figuren 1A oder 1B gezeigten Ausführungsform ausgebildet.

Figur 2B zeigt einen Benutzer 30, der mittels Befehlseingaben das Messsystem 10 steuern kann, sodass das Auswertemodul 12 über eine Kommunikationsleitung 14 die Messelemente 16 ansteuern und Daten von diesen auslesen kann. Die Messelemente 16 sind gemäß der erläuterten Ausführungsform als Schreib-Lese-Köpfe ausgebildet, welche sich an den Positionen A, B bzw. C befinden und entsprechend mit den Bezugszeichen 16a, 16b und 16c bezeichnet sind. An den Positionen B und C sollen sich Datenträger bzw. RFID-Chips 20 befinden, die im Schreib-Lese-Bereich des Messelements 16b bzw. 16c angeordnet sind und folglich von dem Messelement 16b bzw. 16c ausgelesen werden können. Die jeweiligen Datenträger bzw. RFID Chips werden entsprechend mit den Bezugszeichen 16b bzw. 16c bezeichnet.

Die Ausführung des Verfahrens beginnt beispielsweise dadurch, dass der Benutzer 30 mit einem Befehl
*command=0x0010 (CONTINUOUS_MODE)* die Ausführung eines Befehls im kontinuierlichen Modus veranlasst.

Gemäß der geschilderten, bevorzugten Ausführungsform umfasst das Verfahren zum Betreiben eines Messsystems 10 sechs Schritte, die zum Ansteuern der Messelemente 16 ausgeführt werden. Im Folgenden werden die Schritte 202 bis 212, in denen das Auswertemodul mit den Messelementen 16 über die Kommunikationsleitung 14 kommuniziert beispielhaft anhand eines Inventory Befehls erläutert, wenngleich das Verfahren zur Kommunikation gleichermaßen auch für andersartige Befehle geeignet ist und verwendet werden kann. Die Schritte 202 bis 212 sind auch im beispielhaften Programmablauf in Figur 2B schematisch dargestellt.

Gemäß der gezeigten Ausführungsform des Verfahrens werden alle Messelemente 16 gleichartig angesteuert, sodass alle Messelemente 16 denselben Befehl ausführen. Die Kommunikation erfolgt in einem Reportmodus im Busmodus des Messsystems 10.

In Schritt 202 schickt das Auswertemodul 12 den jeweiligen Befehl, hier einen Inventory Befehl, nacheinander an alle mit dem Auswertemodul 12 verbundenen und aktiven Messelemente 16. Der Befehl lautet
*Inventory* req(bus address A, report mode on)*
wobei "A" die dem ersten Messelemente 16 zugewiesene Busadresse darstellt. Entsprechende Befehle mit abweichenden Busadresse, hier B und C, werden an die anderen beiden verbundenen und aktiven Messelemente 16 gesendet.

Die jeweiligen Messelemente 16 bestätigen den Erhalt des Befehls mit
*Inventory* ackn (bus address A)*
bzw. einer entsprechenden Bestätigung mit jeweils zugehöriger Adresse.

Das Auswertemodul 12 kann ebenfalls dem Benutzer 30 die Ausführung des Befehls quittieren, was beispielhaft mit der Rückgabe der Antwort
*response=0x0010 (CONTINUOUS_MODE)*

Die Messelemente 16 versuchen sodann, den erhaltenen Befehl, welcher einen Dauermodusbefehl darstellt, dauerhaft bzw. kontinuierlich über die jeweiligen Luftschnittstellen 18 zwischen den Messelementen bzw. Schreib-Lese-Köpfen zu den potenziell davor angeordneten RFID-Chips 20 (sofern ein solcher vor den jeweiligen Messelementen angeordnet ist) zu senden. Das dauerhafte Senden des Befehls an die potenziell vorhandenen RFID-Chips 20 erfolgt durch ein Senden in regelmäßigen Zeitabständen und das Warten auf eine Reaktion eines RFID-Chips, der sich im Schreib-Lese-Bereich befindet und durch den empfangenen Befehl zu einer Reaktion veranlasst wird.

Abweichend von herkömmlichen Verfahren, d.h. abweichend vom regulären Busmodus, wird gemäß dieser bevorzugten Ausführungsform der Erfindung die kontinuierliche bzw. andauernde Befehlsausführung durch die Messelemente 16 nicht durch das Versenden von weiteren zyklischen Quittierungen der Messelemente 16 über die Kommunikationsleitung 14 an das Auswertemodul 12 signalisiert. Dies bietet den Vorteil, dass der Bus bzw. die Kommunikationsleitung 14 nicht durch derartige weitere zyklische Quittierungen belegt wird, sondern freigehalten wird und somit für das Versenden von weiteren Nachrichten vom Auswertemodul 12 zu den Messelementen 16 freigehalten wird.

Die Ausführung von Schritt 204 hängt vom Vorhandensein eines Datenträgers bzw. RFID-Chips 20 im Schreib-Lese-Bereich des jeweiligen Messelements 16 ab. Der erste Fall liegt dann vor, wenn ein Datenträger bzw. RFID-Chip auf den über die Luftschnittstelle 18 vom Messelement 16 empfangenen Befehl reagiert und eine Antwort an das Messelement 16 sendet, wie gemäß dem Beispiel an den Positionen B und C. In diesem Fall ermittelten die Messelemente 16b und 16c die Messdaten aus dem jeweiligen Datenträger bzw. dem RFID-Chip 20b bzw. 20c, wobei die ermittelten Messdaten eine Identifikation des Datenträgers bzw. RFID-Chips 20b, 20c umfassen können und/oder anderweitige Daten und/oder Informationen, die der Datenträger bzw. RFID-Chip 20b, 20c gespeichert hat und in Reaktion auf den Befehl dem Messelement 16b, 16c bereitstellt. In einem anderen Fall, in welchem kein Datenträger bzw. RFID-Chip im Schreib-Lese-Bereich vorhanden ist, wie an Position A, und/oder aus anderen Gründen nicht auf den vom Messelement 16a über den Luftspalt 18 ausgesandten Befehl reagiert, wird das Messelement 16a vorzugsweise mit dem kontinuierlichen Aussenden des Befehls über den Luftspalt 18 fortfahren, bis ein Datenträger bzw. RFID-Chip 20 im Schreib-Lese-Bereich vorhanden ist und antwortet, oder ein weiterer Befehl zur Beendigung des kontinuierlichen Aussendens des Befehls im Messelement 16a eingeht.

In Schritt 206 werden die ermittelten Messdaten im Messelement 16b, 16c zwischengespeichert. Dazu bereitet das Messelement 16 gemäß der erläuterten Ausführungsform eine Antwort vor, versendet diese aber nicht eigenmächtig an das Auswertemodul 12, sondern speichert diese lediglich im Messelement selbst zwischen. Die vorbereitete und zwischengespeicherte Antwort ist im beispielhaften Programmtext als
*Inventory.rsp*
dargestellt. Diese Antwort kann insbesondere die Messdaten enthalten, welche das Messelement 16b, 16c von dem ausgelesenen Datenträger bzw. RFID-Chip 20b, 20c ermittelt hat.

Dadurch, dass gemäß der bevorzugten Ausführungsform die Kommunikationsleitung 14 freigehalten wird, da die einzelnen Messelemente 16 nicht unaufgefordert die Antworten über die Kommunikationsleitung 14 an das Auswertemodul 12 senden, kann das Auswertemodul 12 nacheinander an alle Messelemente 16 einzeln die jeweiligen gewünschte Befehle senden, ohne dass das Versenden der Befehle durch eine etwaige Antwort der bereits mit einem Befehl versehenen Messelemente 16 beeinträchtigt bzw. blockiert wird.

So kann beispielsweise Schritt 202 für die einzelnen Messelemente 16 nacheinander abgearbeitet werden, sodass alle Messelemente 16 nacheinander mit Befehlen versehen werden, um etwa Datenträger bzw. RFID-Chips 20 zu erkennen, auszulesen und/oder anderweitig zu bearbeiten.

In Schritt 208 liest das Auswertemodul 12 die in den Messelementen 16 ggf. zwischengespeicherten Daten über die Kommunikationsleitung 14 aus. Dazu sendet das Auswertemodul 12 gemäß der erläuterten Ausführungsform über die Kommunikationsleitung 14 vorzugsweise zyklisch einen Befehl
*GetDataOfReportMode.req* nacheinander an jedes Messelement 16, welches aktiv und über die Kommunikationsleitung 14 mit dem Auswertemodul 12 verbunden ist. Sofern die jeweiligen Messelemente 16 Messdaten zwischengespeichert haben, werden die jeweiligen zwischengespeicherten Messdaten bzw. Antworten über die Kommunikationsleitung 14 an das Auswertemodul 12 übermittelt, was gemäß dem erläuterten Beispiel mit
*Inventory* rsp (bus address* B, *UID*)*
dargestellt ist, wobei UID* die übermittelten Messdaten darstellt. Gleiches gilt für das Messelement 16c, wobei für dieses die Adresse C angegeben ist.

Die Übermittlung kann vom Auswertemodul 12 oder vom jeweiligen Messelement 16 ausgehen, jedoch wird die Übermittlung erst durch den vom Auswertemodul 12 bereitgestellten Befehl initiiert, sodass es zu einem geordneten Auslesen der zwischengespeicherten Messdaten aus den einzelnen Messelementen 16 kommt. Hat jedoch ein Messelement 16 keine Messdaten zwischengespeichert, sendet das jeweilige Messelement keine Antwort in Reaktion auf den oben-genannten Befehl zum Auslesen der zwischengespeicherten Messdaten. Nach einem Timeout, d.h. nach Ablauf einer vorbestimmten Zeitspanne, in der keine Antwort bzw. keine zwischengespeicherten Messdaten von dem jeweiligen Messelement bereitgestellt werden, erkennt das Auswertemodul 12, dass in dem jeweiligen Messelement 16 keine Messdaten zwischengespeichert wurden und folglich keine zwischengespeicherten Messdaten auszulesen sind.

Schritt 208 wird gemäß der erläuterten Ausführungsform für alle Messelemente 16 nacheinander wiederholt ausgeführt. Dies kann abwechselnd auf kontinuierliche Weise erfolgen. Die ausgelesenen Messdaten können sodann in dem internen Speicher des Auswertemoduls abgespeichert werden. In einem optionalen Schritt 210 können die ausgelesenen Messdaten auch dem Benutzer 30 ausgegeben und/oder angezeigt werden. Dies ist in Figur 2B durch
*command=0x0011 (GET DATA_FROM FIFO)* und
*response=0x0011 (GET DATA_FROM FIFO, data)*
dargestellt.

Dieses Verfahren ermöglicht es, dass alle Messelemente 16 dauerhaft in der Befehlsausführung tätig sein können und unabhängig voneinander Datenträger bzw. RFID-Chips erkennen, lesen und/oder anderweitig bearbeiten können. Störungen beim Übermitteln der Messdaten von den mehreren Messelementen 16 zum Auswertemodul 14 können durch dieses Verfahren effektiv vermieden werden, da die ermittelten Messdaten von den jeweiligen Messelementen zunächst im Messelement zwischengespeichert werden, und sodann in geordneter Weise nacheinander durch das Auswertemodul 12 von den Messelementen 16 ausgelesen werden.

Optional kann die dauerhafte bzw. kontinuierliche Befehlsausführung durch die Messelemente 16 durch einen entsprechenden Befehl, der vom Auswertemodul 12 an die Messelemente 16 gesendet wird, beendet werden. In Schritt 212 wird dazu ein Reset-Befehl an die einzelnen Messelemente 16 gesendet, welche in Figur 2B wie folgt dargestellt ist:

### ResetTransceiver.req(bus address A)

Ein entsprechender Befehl mit anderer Adresse wird nacheinander auch an die anderen Messelemente 16 gesendet, um auch in diesen Messelementen die kontinuierliche Befehlsausführung zu beenden.

Das Beenden des kontinuierlichen Modus bzw. Dauermodus erfolgt beispielsweise aufgrund eines entsprechenden Befehls durch den Benutzer
*command=0x0012 (CONTINUOUS_MODE_OFF)*
   und wird vorzugsweise dem Benutzer 30 wie folgt bestätigt:
*response=0x0012 (CONTINUOUS_MODE_OFF).*

### Bezugszeichenliste

- 10: Messsystem
- 12: Auswertemodul
- 14: Kommunikationsleitung
- 16, 16a, 16b, 16c: Messelement
- 18: Luftspalt zwischen einem Messelement und einem Datenträger
- 20, 20b, 20c: Datenträger bzw. RFID-Chip
- 30: Benutzer
- 202 - 212: Verfahrensschritte

## Patentansprüche

1. Verfahren zum Betreiben eines Messsystems (10) mit einem Auswertemodul (12) und mehreren Messelementen (16), wobei das Auswertemodul (12) und die Messelemente (16) über eine Kommunikationsleitung (14) verbunden sind und wobei das Verfahren die folgenden Schritte aufweist:
- Ermitteln von Messdaten mittels der mehreren Messelemente (16), wobei zumindest zwei der Messelemente (16) zumindest teilweise zeitgleich die Messdaten ermitteln;
- Zwischenspeichern der ermittelten Messdaten in dem jeweiligen Messelement (16), wobei das Zwischenspeichern der ermittelten Messdaten in einem Pufferspeicher des jeweiligen Messelements 16 erfolgt;
- Auslesen der in den Messelementen (16) zwischengespeicherten Messdaten über die Kommunikationsleitung (14) mittels des Auswertemoduls (12),
**dadurch gekennzeichnet, dass**
das Auslesen der zwischengespeicherten Messdaten ein Fragmentieren der Messdaten in Fragmente und sukzessives Auslesen der Fragmente umfasst.

2. Verfahren gemäß Anspruch 1, wobei das Auslesen der in den Messelementen (16) zwischengespeicherten Messdaten sequentiell erfolgt.

3. Verfahren gemäß einem der vorhergehenden Ansprüche, wobei zumindest eines der Messelemente (16) nach erfolgtem Zwischenspeichern erneut Messdaten ermittelt.

4. Verfahren gemäß einem der vorhergehenden Ansprüche, wobei die Schritte des Ermittelns der Messdaten und des Zwischenspeicherns durch zumindest eines der Messelemente (16) kontinuierlich in abwechselnder Reihenfolge erfolgen.

5. Verfahren gemäß einem der vorhergehenden Ansprüche, wobei die Messelemente (16) parallel betrieben werden.

6. Verfahren gemäß einem der vorhergehenden Ansprüche, ferner umfassend ein Bereitstellen zumindest eines Befehls an die mehreren Messelemente (16) mittels des Auswertemoduls, wobei die Bereitstellung des zumindest einen Befehls an die Messelemente (16) über die Kommunikationsleitung (14) erfolgt.

7. Verfahren gemäß Anspruch 6, wobei zumindest einer der Befehle ein als Dauermodusbefehl ausgebildet ist und die Messelemente (16) dazu veranlasst, kontinuierlich alternierend Messdaten zu ermitteln und zwischenzuspeichern.

8. Messsystem (10), aufweisend:
- ein Auswertemodul (12);
- mehrere Messelemente (16);
- eine Kommunikationsleitung (14), welche das Auswertemodul (12) und die mehreren Messelemente (16) verbindet;
wobei die Messelemente (16) jeweils dazu eingerichtet sind, Messdaten zu ermitteln, wobei das Ermitteln der Messdaten durch die mehreren Messelemente (16) zumindest teilweise zeitgleich erfolgt, und wobei die Messelemente (16) dazu eingerichtet sind, die ermittelten Messdaten in dem jeweiligen Messelement (16) zwischenzuspeichern, wobei das Zwischenspeichern der ermittelten Messdaten in einem Pufferspeicher des jeweiligen Messelements (16) erfolgt;
wobei das Auswertemodul (12) dazu eingerichtet ist, die in den Messelementen (16) zwischengespeicherten Messdaten über die Kommunikationsleitung (14) auszulesen, **dadurch gekennzeichnet, dass** die Messelemente (16) und das Auswertemodul (12) dazu eingerichtet sind, dass das Auslesen der zwischengespeicherten Messdaten ein Fragmentieren der Messdaten in Fragmente und sukzessives Auslesen der Fragmente mittels des Auswertemoduls (12) umfasst.

9. Messsystem (10) gemäß Anspruch 8, wobei die Messelemente (16) jeweils einen Pufferspeicher aufweisen und dazu eingerichtet sind, die ermittelten Messdaten in dem jeweiligen Pufferspeicher zwischen zu speichern.

10. Messsystem (10) gemäß Anspruch 8 oder 9, wobei das Auswertemodul (12) eine Speichereinheit aufweist und dazu eingerichtet ist, die aus den Messelementen (16) ausgelesenen Messdaten in der Speichereinheit zu speichern, wobei die Speichereinheit vorzugsweise einen FIFO-Speicher aufweist.

11. Messsystem (10) gemäß einem der Ansprüche 8 bis 10, wobei zumindest manche der Messelemente jeweils einen Schreib-Lese-Kopf aufweisen oder als solcher ausgebildet sind.

12. Messsystem (10) gemäß einem der Ansprüche 8 bis 11, wobei das Messsystem (10) gemäß dem RS-485 Standard ausgebildet ist.

13. Computerprogrammprodukt, das ein nicht-flüchtiges, computerlesbares Speichermedium umfasst, auf dem ein ausführbarer Programmcode gespeichert ist, der konfiguriert ist, um ein Messsystem (10) dazu zu veranlassen, ein Verfahren nach einem der Ansprüche 1 bis 7 durchzuführen.

## Claims

1. Method for operating a measurement system (10) with an evaluation module (12) and several measuring elements (16), wherein the evaluation module (12) and the measuring elements (16) are connected via a communication line (14) and wherein the method has the following steps:
- detecting measurement data by means of the several measuring elements (16), wherein at least two of the measuring elements (16) detect the measurement data at least partially at the same time;
- buffering the detected measurement data in the respective measuring element (16), wherein the buffering of the detected measurement data is effected in a buffer memory of the respective measuring element 16;
- reading out the measurement data buffered in the measuring elements (16) by means of the evaluation module (12) via the communication line (14),
**characterized in that**
the reading out of the buffered measurement data comprises fragmentation of the measurement data into fragments and successive reading out of the fragments.

2. Method according to claim 1, wherein the reading out of the measurement data buffered in the measuring elements (16) is effected sequentially.

3. Method according to one of the preceding claims, wherein at least one of the measuring elements (16) detects measurement data again after buffering is complete.

4. Method according to one of the preceding claims, wherein the steps of detecting the measurement data and of buffering by at least one of the measuring elements (16) are effected continuously in an alternating sequence.

5. Method according to one of the preceding claims, wherein the measuring elements (16) are operated in parallel.

6. Method according to one of the preceding claims further comprising provision of at least one command to the several measuring elements (16) by means of the evaluation module, wherein the provision of the at least one command to the measuring elements (16) is effected via the communication line (14).

7. Method according to claim 6, wherein at least one of the commands is formed as a continuous mode command and prompts the measuring elements (16) alternately to detect and buffer measurement data continuously.

8. Measurement system (10), having:
- an evaluation module (12);
- several measuring elements (16);
- a communication line (14), which connects the evaluation module (12) and the several measuring elements (16);
wherein the measuring elements (16) are each set up to detect measurement data, wherein the detection of the measurement data is effected by the several measuring elements (16) at least partially at the same time, and wherein the measuring elements (16) are set up to buffer the detected measurement data in the respective measuring element (16), wherein the buffering of the detected measurement data is effected in a buffer memory of the respective measuring element (16);
wherein the evaluation module (12) is set up to read out the measurement data buffered in the measuring elements (16) via the communication line (14), **characterized in that** the measuring elements (16) and the evaluation module (12) are set up so that the reading out of the buffered measurement data comprises fragmentation of the measurement data into fragments and successive reading out of the fragments by means of the evaluation module (12).

9. Measurement system (10) according to claim 8, wherein the measuring elements (16) each have a buffer memory and are set up to buffer the detected measurement data in the respective buffer memory.

10. Measurement system (10) according to claim 8 or 9, wherein the evaluation module (12) has a memory unit and is set up to save the measurement data read out from the measuring elements (16) in the memory unit, wherein the memory unit preferably has a FIFO buffer.

11. Measurement system (10) according to one of claims 8 to 10, wherein at least some of the measuring elements each have a read/write head or are formed as such.

12. Measurement system (10) according to one of claims 8 to 11, wherein the measurement system (10) is formed in accordance with the RS-485 standard.

13. Computer program product which comprises a non-volatile, computer-readable memory medium on which an executable program code is saved, which is configured to prompt a measurement system (10) to carry out a method according to one of claims 1 to 7.

## Revendications

1. Procédé d'actionnement d'un système de mesure (10) avec un module d'analyse (12) et plusieurs éléments de mesure (16), dans lequel le module d'analyse (12) et les éléments de mesure (16) sont reliés via un câble de communication (14) et dans lequel le procédé comprend les étapes suivantes :
- détermination de données de mesure à l'aide de plusieurs éléments de mesure (16), dans lequel au moins deux des éléments de mesure (16) déterminent au moins en partie en même temps les données de mesure ;
- stockage temporaire des données de mesure déterminées dans l'élément de mesure (16) respectif, dans lequel le stockage temporaire des données de mesure déterminées se produit dans une mémoire tampon de l'élément de mesure 16 respectif ;
- sélection des données de mesure stockées temporairement dans les éléments de mesure (16) via le câble de communication (14) à l'aide du module d'analyse (12) ; **caractérisé en ce que** :
la sélection des données de mesure stockées temporairement comprend une fragmentation des données de mesure en fragments et la sélection successive des fragments.

2. Procédé selon la revendication 1, dans lequel la sélection des données de mesure stockées temporairement dans les éléments de mesure (16) se produit de façon séquentielle.

3. Procédé selon l'une quelconque des revendications précédentes, dans lequel au moins un des éléments de mesure (16) est déterminé après stockage temporaire réussi de nouvelles données de mesure.

4. Procédé selon l'une quelconque des revendications précédentes, dans lequel les étapes de détermination des données de mesure et du stockage temporaire sont réalisées en continu via au moins un des éléments de mesure (16) de façon alternée.

5. Procédé selon l'une quelconque des revendications précédentes, dans lequel les éléments de mesure (16) sont entraînés parallèlement.

6. Procédé selon l'une quelconque des revendications précédentes, comprenant en outre une mise à disposition des multiples éléments de mesure (16) d'au moins un ordre à l'aide du module d'analyse, dans lequel la mise à disposition de l'au moins un ordre aux éléments de mesure (16) se produit via le câble de communication (14).

7. Procédé selon la revendication 6, dans lequel au moins un des ordres est réalisé sous la forme d'un ordre en mode continu et déclenche les éléments de mesure (16) pour déterminer et stocker de façon temporaire en continu et de façon alternée des données de mesure.

8. Système de mesure (10), comportant :
- un module d'analyse (12) ;
- plusieurs éléments de mesure (16) ;
- un câble de communication (14) qui relie le module d'analyse (12) et les multiples éléments de mesure (16) ; dans lequel les éléments de mesure (16) sont respectivement conçus pour déterminer les données de mesure, dans lequel la détermination des données de mesure se produit au moins en partie en même temps via plusieurs éléments de mesure (16) et dans lequel les éléments de mesure (16) sont conçus pour stocker de façon temporaire les données de mesure déterminées dans l'élément de mesure (16) respectif, dans lequel le stockage temporaire des données de mesure déterminées s'effectue dans une mémoire tampon de l'élément de mesure (16) respectif ;
dans lequel le module d'analyse (12) est conçu pour sélectionner les données de mesure stockées temporairement dans les éléments de mesure (16) via le câble de communication (14) ;
**caractérisé en ce que** :
les éléments de mesure (16) et le module d'analyse (12) sont conçus de telle sorte que la sélection des données de mesure stockées temporairement comprend une fragmentation des données de mesure en fragments et la sélection successive des fragments à l'aide du module d'analyse (12).

9. Système de mesure (10) selon la revendication 8, dans lequel les éléments de mesure (16) comportent respectivement une mémoire tampon et sont conçus pour stocker de façon temporaire les données de mesure déterminées dans la mémoire tampon respective.

10. Système de mesure (10) selon la revendication 8 ou 9, dans lequel le module d'analyse (12) comporte une unité de mémoire et est conçu pour mémoriser les données de mesure sélectionnées dans les éléments de mesure (16) dans l'unité de mémoire, dans lequel l'unité de mémoire comporte de préférence une mémoire FIFO.

11. Système de mesure (10) selon l'une quelconque des revendications 8 à 10, dans lequel au moins une partie des éléments de mesure comportent respectivement une tête de lecture-écriture ou sont réalisés de telle façon.

12. Système de mesure (10) selon l'une quelconque des revendications 8 à 11, dans lequel le système de mesure (10) est réalisé selon la norme RS-485.

13. Produit de programme informatique qui comprend un support de mémoire lisible par ordinateur non volatile sur lequel un code de programmation exécutable est mémorisé et qui est configuré pour amener un système de mesure (10) à réaliser un procédé selon l'une quelconque des revendications 1 à 7.
